# EUROPÄISCHE PATENTSCHRIFT

(11) **EP 1 047 497 B1**
(45) Veröffentlichungstag und Bekanntmachung des Hinweises auf die Patenterteilung: **27.07.2005**
(21) Anmeldenummer: 98966365.3
(22) Anmeldetag: 17.12.1998
(51) Int. Cl.: B01J 23/745, C01B 17/78, B01J 35/10

(54) **VERFAHREN ZUR HERSTELLUNG VON SCHWEFELSÄURE**
METHOD FOR PRODUCING SULFURIC ACID
PROCEDE DE PREPARATION D'ACIDE SULFURIQUE

(30) Priorität: 13.01.1998 DE 19800800
(43) Veröffentlichungstag der Anmeldung: 02.11.2000
(73) Patentinhaber: Outokumpu Oyj, 02200 Espoo (FI)
(72) Erfinder: WINKLER, Egon, D-65439 Flörsheim (DE); SCHMIDT, Georg, D-60431 Frankfurt am Main (DE); HOLLNAGEL, Achim, D-60599 Frankfurt am Main (DE); WERNER, Dietrich, D-64409 Messel (DE); ANASTASIJEVIC, Nikola, D-63674 Altenstadt (DE); SCHÜTH, Franz-Ferdinand, D-61440 Oberursel (DE); WINGEN, Annette, D-60437 Frankfurt am Main (DE)
(74) Vertreter: KEIL & SCHAAFHAUSEN
(86) Internationale Anmeldenummer: PCT/EP1998/008310
(87) Internationale Veröffentlichungsnummer: WO 1999/036175

(56) Entgegenhaltungen:
- EP-A- 0 325 214
- EP-A- 0 409 353
- DE-B- 2 213 580
- US-A- 3 759 825
- US-A- 4 158 048

## Beschreibung

Die Erfindung betrifft ein Verfahren zum Herstellen von Schwefelsäure aus SO₃ und Wasser, wobei man das SO₃ katalytisch durch Umsetzen von SO₂ mit molekularem Sauerstoff erzeugt.

Die Herstellung von Schwefelsäure aus SO₂, welches zunächst katalytisch zu SO₃ oxidiert wird, ist ausführlich in Ullmann's Encyclopedia of Industrial Chemistry, 5. Auflage, Band A25, Seiten 644 bis 664, beschrieben. Die bekannten Katalysatoren für die Oxidation des SO₂, die z. B. V₂O₅ als aktive Komponente enthalten, arbeiten bevorzugt im Temperaturbereich von 380 bis 620°C. Höhere Temperaturen schädigen den Katalysator. Dies hat zur Folge, dass das Gas, welches man der Katalyse aufgibt, einen SO₂-Gehalt von höchstens etwa 12 Vol.-% aufweisen soll, damit die Exothermie der Oxidationsreaktion gut beherrschbar bleibt. In DE-C-27 10 350 ist ein Katalysator für die Umsetzung von SO₂ zu SO₃ beschrieben, die im Temperaturbereich von 600 bis 800°C arbeitet. Der Katalysator weist einen Siliciumoxid-Träger mit Tridymitstruktur und eine Eisen, Kupfer und ein Alkalimetall enthaltende Aktivkomponente auf.

Das US-Patent 3,759,825 bezieht sich auf einen Katalysator mit kalziniertem Kupfer-Eisen-Träger, der zur Umwandlung von Thiolen in Disulfide geeignet ist. Die entsprechende Umwandlungsreaktion wird bei einer Temperatur zwischen 0 bis etwa 300°F (ca. -18 bis 149°C), vorzugsweise bei etwa 150°F (ca. 66°C) durchgeführt. Diese Temperaturen liegen erheblich unter den Temperaturen, bei welchen SO₂ zu SO₃ oxidiert wird. Die Anforderungen für die Umwandlung von Thiolen in Disulfide unterscheiden sich zudem deutlich von denen der Oxidation von SO₂ zu SO₃.

Die EP 0 409 353 A1 beschreibt Katalysatoren für die selektive Reaktion von Schwefelverbindungen zu elementarem Schwefel, wobei diese eine spezifische Oberfläche von mehr als 20 m²/g aufweisen. Die Minimaltemperatur in dem Katalysatorbett wird unter 330°C und vorzugsweise unter 300°C gehalten. Vorteil dieser Katalysatoren soll sein, dass sie es ermöglichen, die Gastemperatur anfangs niedriger zu halten, da die Initialtemperatur des Katalysators niedriger ist als die aus dem vormaligen Stand der Technik bekannte.

Die DE 22 13 580 B offenbart ein Verfahren, in dem ein SO₂-haltiges Gas mit 11-60 Vol.-% SO₂ zunächst über einen Vanadinkontakt bei Temperaturen bis maximal 620°C und dann über einen Eisenoxydkontakt bei Temperaturen bis 760°C geführt wird. Sofern der SO₂-Gehalt noch zu hoch ist, wird das erhaltene Gas gekühlt und erneut über einen Vanadinkontakt bei Temperaturen von 550-620°C und dann über einen Eisenoxydkontakt bei 630-710°C geführt. Der letztgenannte Schritt kann beliebig oft wiederholt werden bis der SO₂-Gehalt hinreichend reduziert ist. Es findet sich kein Hinweis auf die Eignung von Eisen-Trägerkatalysatoren für die Oxidation von SO₂ mit hohen SO₂-Gehalten oder auf eine Absorberstufe zur Herstellung von Schwefelsäure.

Der Erfindung liegt die Aufgabe zugrunde, ein Verfahren zur Schwefelsäure-Herstellung bereitzustellen bei welchem man von Gasen mit hoher SO₂-Konzentration ausgeht.

Die Aufgabe wird gemäß der Erfindung durch ein Verfahren mit den Merkmalen des Anspruchs 1 gelöst.

Vorteilhafte Ansgestaltungen der Erfindung sind Gegunstand des Unteransprüche.

Als Trägermaterialien des Katalysators kommen Silikate, insbesondere Zeolithe (z. B. Zeolithe vom Typ Beta), mesoporöse Kieselgele (z. B. synthetisiert gemäß US-Patent 3 556 725 oder MCM-41 von Mobil Oil als reines SiO₂-Material), auch solche mesoporöse Kieselgele mit bis zu 10 Gew.-% Fremdelementen (z. B. Bor), Diatomeenerde, amorphes SiO₂ oder mesoporöses Alumosilikat in Frage (z. B. aluminiumhaltiges MCM-41 von Mobil Oil). Vorteilhafte Träger bestehen z. B. zu 90 bis 100 Gew.-% aus einem Zeolithen oder aus mesoporösem SiO₂. Einzelheiten zu mesoporösem SiO₂ finden sich auch in WO-A-91/11390 und in "Microporous Materials" 10 (1997), Seiten 283-286.

Die Aktivkomponente des Katalysators zu 10 bis 80 % aus Eisen und zu mindestens 80 Gew.-% aus Eisenoxiden. Die Aktivkomponente kann zusätzlich Natrium, Kalium und/oder Cäsium enthalten. Der Anteil dieser Alkalimetalle kann, bezogen auf das Gesamtgewicht des Katalysators, bis zu 10 Gew.-% betragen.

Die Aktivkomponente des Katalysators kann ferner Vanadium und/oder Schwefelverbindungen (z. B. Pyrosulfat) aufweisen. In der Aktivkomponente kann das Gewichtsverhältnis V:Fe im Bereich von 1:1 bis 1,3:1 liegen. Für den Sulfatgehalt im Katalysator empfehlen sich 1 bis 7 Gew.-%, bezogen auf das gesamte Gewicht des Katalysators. Wenn die Aktivkomponente des Katalysators auch Kupfer enthält, wird der Cu-Gehalt bis 1 Gew.-% des Fe-Gehalts betragen.

Im Labor wurden folgende Katalysatoren hergestellt:
Erster Katalysator:
   Als Ausgangsmaterial diente ein mesoporöses SiO₂ mit geordneter Porenstruktur, mit amorphen Wänden und einem regelmäßig hexagonal angeordneten Porensystem mit Porengrößen zwischen 2 und 8 nm (synthetisiert in Anlehnung an WO-A-91/11390). Es besitzt eine gute thermische Stabilität bis 1000°C und eine BET-Oberfläche von etwa 1000 m²/g. Zu 10 g einer wäßrigen 25 %-igen C₁₆H₃₃N(CH₃)₃Cl-Lösung wurde innerhalb von 15 Minuten ein Gemisch aus 1,8 g Na-Wasserglas (Zusammensetzung 27,5 Gew.-% SiO₂, 8,3 Gew.-% Na₂O, dazu Wasser), 1,3 g SiO₂ und 10 g Wasser gegeben. Nach 30-minütigem Rühren wurde die Suspension in einem verschraubten Polypropylen-Gefäß 48 Stunden lang auf 90°C erhitzt. Danach wurde abfiltriert, gewaschen und 8 Stunden lang bei 90°C getrocknet. Das getrocknete Gemisch wurde mit einer Heizrate von 1°C pro Minute auf 550°C erhitzt und 5 Stunden lang bei dieser Temperatur gehalten. 1 g des Produkts wurde intensiv mit 3,5 ml einer 0,95 molaren Fe(NO₃)-Lösung gemischt und anschließend 2,5 Stunden lang bei 90°C getrocknet. Das Produkt wurde eine Stunde lang in 25 g destilliertem Wasser gerührt, abfiltriert, bei 90°C getrocknet und dann wie folgt thermisch behandelt: Aufheizen mit 5°C pro Minute auf 400°C, 3 Stunden lang halten auf 400°C, dann Aufheizen mit 5°C pro Minute auf 700°C und anschließendes Halten während 3 Stunden. Das Produkt wies eine BET-Oberfläche von 478 m²/g auf, das Gewichtsverhältnis Si:Fe betrug 5:1.
Zweiter Katalysator:
   3 g kommerzielles SiO₂ (BASF D11-10) wurde zu einer Lösung von 0,18 g NH₄VO₃ in 20 ml Wasser gegeben. Sodann wurden 0,62 g Fe(NO₃)₃·9H₂O, gelöst in 1 g Wasser, unter schnellem Rühren zugetropft. Das Produkt wurde abfiltriert, gewaschen, getrocknet, auf 800°C aufgeheizt und 24 Stunden lang auf 800°C gehalten. Das Gewichtsverhältnis Si:Fe:V beträgt 33:1:1,3. Auf gleiche Art läßt sich Eisenvanadat auf Träger mit großer Oberfläche aufbringen.

Proben der beiden beschriebenen Katalysatoren wurden im Labor getestet, um ihre Aktivität bezüglich der Oxidation von SO₂ zu SO₃ festzustellen. Von jedem Katalysator wurden 0,5 ml einer Fraktion mit Teilchengrößen zwischen 500 und 1000 µm zur Aktivierung drei Stunden lang bei 324°C im Stickstoffstrom gehalten. Zur Messung der Aktivität wurden 24,7 ml/min eines Gases bestehend aus 20 Vol.-% SO₂, 22 Vol.-% O₂ und 58 Vol.-% N₂ über die aktivierten Katalysatorproben geleitet, wobei sich eine Verweilzeit in der Katalysatorschüttung von 1,2 s ergab. Die Aktivität (Prozentanteil des umgesetzten SO₂ ) in Abhängigkeit von der Temperatur zeigt die folgende Tabelle:

| Temperatur | 1. Katalysator | 2. Katalysator |
|---|---|---|
| 500 °C | 46 % | 18 % |
| 550 °C | 58% | 29 % |
| 600 °C | 72 % | 43 % |
| 650 °C | 65 % | 55 % |
| 700 °C | 51 % | 51 % |

Die Katalysatoren eignen sich besonders als Vorkontakt, um ein Gas mit hohem SO₂-Gehalt teilweise zu SO₃ umzusetzen und Schwefelsäure zu erzeugen, bevor man das restliche Gas mit verringertem SO₂-Gehalt z. B. in eine konventionelle Schwefelsäure-Herstellung leiten kann. Hierbei führt man das SO₂ und O₂ enthaltende Gas mit einem SO₂-Gehalt von 13 bis 50 Vol.-% und einem Sauerstoff-Gehalt entsprechend einem O₂/SO₂-Volumenverhältnis von mindestens 1:2 einer Vorkontaktstufe zu, führt das Gas und den Sauerstoff in der Vorkontaktstufe durch mindestens ein Bett (Vorkontaktbett) eines körnigen Katalysators (Vorkontakt), wobei der Vorkontakt die bereits beschriebenen Merkmale aufweist, und man hält die maximale Temperatur am Vorkontakt im Bereich von 580 bis 800°C. In der Vorkontaktstufe werden 20 bis 80 % des zugeführten SO₂ zu SO₂ umgesetzt und aus der Vorkontaktstufe ein erstes, SO₃-haltiges Gasgemisch abgezogen, welches man auf Temperaturen von 50 bis 300°C kühlt und in mindestens einen Absorber leitet, wobei man das erste Gasgemisch im Absorber mit im Kreislauf geführter, Wasser enthaltender Schwefelsäure in direkten Kontakt bringt und einen Schwefelsäure-Teilstrom ableitet. Aus dem Absorber zieht man ein zweites, SO₂ enthaltendes Gasgemisch ab, erwärmt es auf eine Temperatur von 380 bis 600°C und leitet es mit einer SO₂-Konzentration von 10 bis 30 Vol.-% in eine nachfolgende Oxidationsstufe, in welcher man katalytisch bei Temperaturen von 480 bis 770°C SO₂ mit Sauerstoff zu SO₃ umsetzt. Das in der Oxidationsstufe gebildete SO₃ wird in weiteren Verfahrensschritten zu Schwefelsäure weiterverarbeitet. In der nachfolgenden Oxidationsstufe verwendet man übliche Katalysatoren. Diese Katalysatoren können aktive Komponenten haben, die z. B. zu mindestens 5 Gew.-% aus V₂O₅ bestehen.

Die Vorkontaktstufe kann mindestens zwei Vorkontaktbetten aufweisen, die vom Gas nacheinander durchströmt werden. Dabei ist es zweckmäßig, das SO₂, O₂ und SO₃ enthaltende Gas zwischen den Vorkontaktbetten auf Temperaturen von höchstens 550°C zu kühlen. Aus dem letzten Vorkontaktbett zieht man ein Gas nach Zwischenabsorption mit vorzugsweise höchstens 13 Vol.-% SO₂ ab und leitet es in eine nachfolgende Oxidationsstufe.

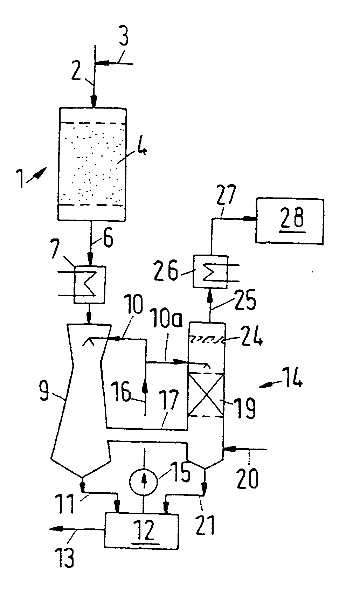

Ein Fließschema des Verfahrens wird mit Hilfe der Zeichnung erläutert.

Der Vorkontaktstufe (1) führt man durch die Leitung (2) SO₂-reiches Gas zu, dem man durch die Leitung (3) O₂-haltiges Gas (z. B. Luft) zugemischt hat. Der SO₂-Gehalt im Gas der Leitung (2) liegt im Bereich von 13 bis 50 Vol.-% und zumeist mindestens 15 Vol.%, das Gas ist vorzugsweise auf Temperaturen von 350 bis 500°C vorgewärmt. Die Vorkontaktstufe (1) besteht in der in der Zeichnung dargestellten Verfahrensvariante aus dem Festbett (4) des temperaturbeständigen Katalysators, der hier als Vorkontakt bezeichnet wird; das Bett wird hier als Vorkontaktbett (4) bezeichnet. Es kann zweckmäßig sein, am Eintritt des Bettes (4) einen konventionellen Katalysator (z.B. Vanadinkontakt) in dünner Schicht als sogenannte Zündschicht vorzusehen, um die Temperatur im Gas ausreichend zu steigern, damit die Oxidationsreaktion im Bett des Vorkontakts sofort voll einsetzt.

Am Eintritt des Vorkontaktbettes (4) sorgt man für ein O₂/SO₂-Volumenverhältnis von mindestens 0,5:1. Am Vorkontakt erfolgt ein Temperaturanstieg durch die Oxidationsreaktionen bei der Bildung von SO₃. Ein erstes, SO₃-haltiges Gasgemisch verläßt die Vorkontaktstufe (1) in der Leitung (6) mit Temperaturen im Bereich von 580 bis 800°C und vorzugsweise 600 bis 700°C. Dieses erste Gasgemisch wird im Abhitzekessel (7) auf Temperaturen von 50 bis 300°C gekühlt, dabei kann aus Wasser wertvoller Hochdruckdampf gewonnen werden. Das Gasgemisch tritt dann in einen ersten Absorber (9) ein, der ähnlich einem Venturiwäscher ausgebildet ist. Schwefelsäure, die aus der Leitung (10) kommt, wird in das Gas eingesprüht, wobei die Konzentration der Schwefelsäure durch Aufnahme von SO₃ erhöht wird. Die im ersten Absorber (9) gebildete Schwefelsäure fließt durch die Leitung (11) zu einem Sammeltank (12), überschüssige Schwefelsäure, deren Konzentration üblicherweise im Bereich von 95 bis 100 Gew.-% liegt, wird in der Leitung (13) abgezogen.

Aus dem Sammeltank (12) führt man durch die Kreislaufpumpe (15) und die Leitung (16) Schwefelsäure zum ersten Absorber (9) und auch zu einem zweiten Absorber (14), der durch den Kanal (17) mit dem ersten Absorber verbunden ist. SO₃-haltiges Gas strömt durch den Kanal (17) zum zweiten Absorber (14) und dort aufwärts durch eine Schicht (19) aus Kontaktelementen, die mit Schwefelsäure aus der Leitung (10a) besprüht wird. Wasser wird in der Leitung (20) herangeführt, und die in der Leitung (21) ablaufende Schwefelsäure gelangt ebenfalls in den Sammeltank (12). Die Absorber (9) und (14) können in der Praxis auch anders als in der Zeichnung dargestellt ausgebildet sein.

Das im zweiten Absorber (14) aufwärts strömende Gas gibt Schwefelsäuretröpfchen im Tropfenabscheider (24) ab und gelangt dann durch die Leitung (25) zu einem Erhitzer (26), der die Temperatur des Gases auf 380 bis 500°C anhebt. Das Gas der Leitung (27), das hier auch als zweites Gasgemisch bezeichnet wird, weist eine SO₂-Konzentration von 10 bis 30 Vol.-% auf. Wegen dieser relativ geringen SO₂-Konzentration kann es einer konventionellen Schwefelsäure-Anlage (28) aufgegeben werden, die mit üblichen Katalysatoren zur Oxidation von SO₂ zu SO₃ arbeitet.

Die Arbeitsweise und der Aufbau einer solchen konventionellen Anlage ist bekannt und z. B. in Ullmann's Encyclopedia of Industrial Chemistry, wie bereits erwähnt, beschrieben.

### Beispiel:

Im Labor verwendet man den zuvor beschriebenen ersten Katalysator, um ein Gasgemisch mit den Komponenten der Spalte A der nachfolgenden Tabelle teilweise zu SO₃ umzusetzen:

| | **A** | **B** | **C** | **D** |
|---|---|---|---|---|
| SO₂ (Vol.-%) | 30 | 21,1 | 11,1 | 14,3 |
| SO₃ (Vol.-%) | -- | 10,5 | 22,2 | -- |
| O₂ (Vol.-%) | 33 | 29,5 | 25,6 | 32,9 |
| N₂ (Vol.-%) | 37 | 38,9 | 41,1 | 52,8 |

Die Daten des Beispiels sind teilweise berechnet. Der Katalysator (Vorkontakt) ist zu zylindrischen Extrudaten von etwa 8 mm Höhe und 6 mm Durchmesser geformt. Der Katalysator ist auf zwei nacheinander durchströmten Horden (Vorkontaktbetten) verteilt, jede Horde enthält 40 g Katalysator mit einer Schütthöhe von 8 cm, der Hordendurchmesser beträgt 4,7 cm. Jede Horde weist auf der Seite des Gaseintritts einen kommerziellen Vanadin-Katalysator zur Temperaturerhöhung auf ("Zündschicht"), damit die gewünschte Oxidation am Vorkontakt stattfindet. Die Höhe der Zündschicht beträgt 1 cm.

100 l/h des Gasgemisches der Spalte A der obigen Tabelle treten mit einer Temperatur von 420°C in die Zündschicht der ersten Horde und mit 550°C in die Vorkontakt-Schüttung ein. Ein Gasgemisch mit der in obiger Tabelle in Spalte B angegebenen Zusammenstzung verläßt mit einer Temperatur von 670°C die erste Horde und wird durch indirekten Wärmeaustausch auf 420°C gekühlt. Das gekühlte Gasgemisch leitet man durch die zweite Horde, die in gleicher Weise wie die erste Horde eine Zündschicht und eine Schüttung des Vorkontakts enthält. Am Ausgang der zweiten Horde has das Gasgemisch eine Temperatur von 670°C und die in obiger Tabelle in Spalte C angegebene Zusammensetzung. Wenn man dieses Gasgemisch kühlt und durch Absorption mittels Schwefelsäure, wie zusammen mit der Zeichnung beschrieben, das SO₃ entfernt, erhält man ein Gasgemisch mit der in Spalte D in obiger Tabelle angegebenen Zusammensetzung. Dieses Gasgemisch mit einem SO₂ - Gehalt von 14,3 Vol.-% kann gemäß modernem Stand der Technik (z.B. Lurgi, Frankfurt) in einem Hauptkonverter weiterverarbeitet werden, wobei SO₃ und Schwefelsäure gebildet wird und ein Endgas (tail gas) mit einem SO₂ - Gehalt von weniger als 200 ppm übrig bleibt.

## Patentansprüche

1. Verfahren zum Herstellen von Schwefelsäure aus SO₃ und Wasser, wobei man das SO₃ katalytisch durch Umsetzen von SO₂ mit molekularem Sauerstoff erzeugt, **dadurch gekennzeichnet, dass** man einer Vorkontaktstufe ein SO₂ und O₂ enthaltendes Gas mit einem SO₂-Gehalt von 13 bis 50 Vol.-% und einem Sauerstoff-Gehalt entsprechend einem O₂/SO₂-Volumenverhältnis von mindestens 1:2 zuführt, dass man das Gas und den Sauerstoff in der Vorkontaktstufe durch mindestens ein Bett (Vorkontaktbett) eines körnigen Katalysators (Vorkontakt) leitet, dass der Vorkontakt aus einem porösen Träger und einer mit dem Träger verbundenen Aktivkomponente besteht, wobei der Träger eine BET-Oberfläche von 100 bis 2000 m²/g und einen SiO₂-Gehalt von mindestens 90 Gew.-% aufweist, die Aktivkomponente zu 10 bis 80 Gew.-% aus Eisen besteht und das Gewichtsverhältnis Träger:Aktivkomponente im Bereich von 1:1 bis 100:1 liegt, dass die maximale Temperatur am Vorkontakt von 580 bis 800°C beträgt, dass man in der Vorkontaktstufe 20 bis 80 % des zugeführten SO₂ zu SO₃ umsetzt und aus der Vorkontaktstufe ein erstes, SO₃-haltiges Gasgemisch abzieht, welches man auf Temperaturen von 50 bis 300°C kühlt und in mindestens einen Absorber leitet, dass man das erste Gasgemisch im Absorber mit im Kreislauf geführter, Wasser enthaltender Schwefelsäure in direkten Kontakt bringt und einen Schwefelsäure-Teilstrom ableitet, dass man aus dem Absorber ein zweites, SO₂ enthaltendes Gasgemisch abzieht und auf eine Temperatur von 380 bis 600°C erwärmt, dass man das zweite Gasgemisch mit einer SO₂-Konzentration von 10 bis 30 Vol.-% in eine nachfolgende Oxidationsstufe leitet, in welcher man SO₂ mit Sauerstoff katalytisch bei Temperaturen von 480 bis 770°C zu SO₃ umsetzt, und dass man das in der Oxidationsstufe gebildete SO₃ in weiteren Verfahrensschritten zu Schwefelsäure weiterverarbeitet.

2. Verfahren nach Anspruch 1, **dadurch gekennzeichnet, dass** man in der Vorkontaktstufe das SO₂ und O₂ enthaltende Gas durch mindestens zwei Vorkontaktbetten leitet, wobei man das Gas zwischen den Betten auf eine Temperatur von höchstens 550°C kühlt und dass man das Gas nach Zwischenabsorption mit einem SO₂-Gehalt von höchstens 13 Vol.-% als zweites Gasgemisch in die nachfolgende Oxidationsstufe leitet.

3. Verfahren nach Anspruch 1 oder 2, **dadurch gekennzeichnet, dass** man in der nachfolgenden Oxidationsstufe einen Katalysator verwendet, dessen aktive Komponente zu mindestens 5 Gew.-% auf Vanadinbasis beruht.

## Claims

1. A process of producing sulfuric acid from SO₃ and water, where the SO₃ is produced catalytically by reacting SO₂ with molecular oxygen, **characterized in that** a gas containing SO₂ and O₂ with and SO₂ content of 13 to 50 vol-l% and an oxygen content corresponding to an O₂/SO₂ volume ratio of at least 1:2 is supplied to a precontact stage, that in the precontact stage the gas and the oxygen are passed through at least one bed (precontact bed) of a granular catalyst (precontact), that the precontact consists of a porous carrier and an active component connected with the carrier, where the carrier has a BET surface of 100 to 2000 m²/g and an SiO₂ content of at least 90 wt-%, the active component consists of 10 to 80 wt-% iron, and the weight ration carrier:active component lies in the range from 1:1 to 100:1, that the maximum temperature at the precontact is 580 to 800°C, that in the precontact stage 20 to 80% of the supplied SO₂ are converted to SO₃, and from the precontact stage there is withdrawn a first gas mixture containing SO₃, which gas mixture is cooled to temperatures of 50 to 300°C and introduced into at least one absorber, that in the absorber the first gas mixture is brought in direct contact with circulating sulfuric acid containing water, and a partial stream of sulfuric acid is withdrawn, that a second gas mixture containing SO₂ is withdrawn from the absorber and heated to a temperature from 380 to 600°C, that the second gas mixture with an SO₂ concentration of 10 to 30 vol-% is introduced into a subsequent oxidation stage, in which SO₂ is catalytically reacted with oxygen at temperatures of 480 to 770°C to form SO₃, and that the SO₃ formed in the oxidation stage is processed in further process steps to form sulfuric acid.

2. The process as claimed in claim 1, **characterized in that** in the precontact stage the gas containing SO₂ and O₂ is passed through at least two precontact beds, where the gas is cooled between the beds to a temperature of not more than 550°C, and that after an intermediate absorption the gas having an SO₂ content of not more than 13 vol-% is introduced as second gas mixture into the subsequent oxidation.

3. The process as claimed in claim 1 or 2, **characterized in that** in the subsequent oxidation stage a catalyst is used, whose active component is based on vanadium for at least 5 wt-%.

## Revendications

1. Procédé à produire de l'acide sulfurique de SO₃ et de l'eau, le SO₃ étant généré de manière catalytique par l'intermédiaire de réaction de SO₂ avec oxygène moléculaire, **caractérise en ce que** l'on amène à un stade de contact auxiliaire un gaz contenant SO₂ et O₂ avec une teneur en SO₂ de 13 à 50 pour cent en volume et une teneur en oxygène correspondant à une O₂/SO₂ relation en volume d'au moins 1 : 2, que l'on amène le gaz et l'oxygène dans le stade de contact auxiliaire à travers d'au moins un lit (lit de contact auxiliaire) d'un catalyseur en grains (contact auxiliaire), que le contact auxiliaire est composé d'un porteur poreux et d'une composante active liée au porteur, le porteur comportant une BET surface de 100 à 2000 m²/g et une teneur en SiO₂ d'au moins 90 pour cent en poids, 10-80 pour cent en poids de la composante étant formé de fer et la relation en poids de porteur/composante active se trouvant dans la portée de 1 : 1 à 100 : 1, que la température maxima au contact auxiliaire est 580°C à 800°C, que l'on transforme dans le stade de contact auxiliaire 20 à 80 % du SO₂ amené en SO₃ en enlevant du stade de contact auxiliaire un mélange de gaz premier contenant SO₃, en le refroidissant aux températures de 50 à 300°C et l'amenant au moins dans un absorbeur, que l'on mène en contact directe le premier mélange de gaz à l'intérieur de l'absorbeur avec l'acide sulphurique en circuit contenant de l'eau, en enlevant une partie de l'acide sulphurique, que l'on enlève un mélange des gaz secondaire contenant SO₂ de l'absorbeur en le portant à une température de 380 à 600°C, que l'on amène le mélange de gaz secondaire d' une SO₂ concentration de 10 à 30 pour cent en volume dans un stade d'oxydation suivant dans lequel on transforme SO₂ avec oxygène de manière catalytique aux températures de 480 à 770°C en SO₂, et que l'on transforme le SO₃ formé dans le stade d'oxydation dans d'autres cycles opératoires en acide sulphurique.

2. Procédé selon la revendication 1, **caractérisé en ce que** le gaz contenant le SO₂ et le O₂ dans le stade de contact auxiliaire est amené à travers au moins deux lits à contact auxiliaire en refroidissant le gaz entre les lits à une température maxima de 550°C, et que le gaz après l'absorption intermédiaire d'une teneur en SO₂ maxima de 13 pour cent en volume est amené comme mélange de gaz secondaire dans le stade d'oxydation suivant.

3. Procédé selon les revendication 1 ou 2, **caractérisé par** l'utilisation d'un catalyse dans le stade d'oxydation suivant, composante active duquel au moins par 5 pour cent en poids est basé sur vanadinite.
